**Europäisches Patentamt**

**European Patent Office**

**Office européen des brevets**

(11) Publication number : **0 600 696 A1**

(12) **EUROPEAN PATENT APPLICATION**

(21) Application number : 93309506.9

(22) Date of filing : 29.11.93

(51) Int. Cl.$^5$ : **C08F 14/06, C08F 2/44**

(30) Priority : 30.11.92 JP 345438/92

(43) Date of publication of application :
08.06.94 Bulletin 94/23

(84) Designated Contracting States :
**DE FR GB NL PT**

(71) Applicant : **Shin-Etsu Chemical Co., Ltd.**
**6-1, Otemachi 2-chome**
**Chiyoda-ku Tokyo 100 (JP)**

(72) Inventor : **Amano, Tadashi**
**5-3-22, Shitte Chuo,**
**Kamisu-machi**
**Kashima-gun, Ibaraki-ken (JP)**
Inventor : **Fujiwara, Makoto**
**5-7-35, Shitte Chuo,**
**Kamisu-machi**
**Kashima-gun, Ibaraki-ken (JP)**

(74) Representative : **Collier, Jeremy Austin Grey**
**J.A.KEMP & CO.**
**14 South Square**
**Gray's Inn**
**London WC1R 5LX (GB)**

(54) Process for preparing vinyl chloride polymers.

(57)    A process for preparing vinyl chloride polymers comprises suspending and dispersing vinyl chloride or its mixture with comonomers in polymerization initiators in an aqueous medium and subjecting the resultant suspension to suspension polymerization. The suspension comprises a phenolic antioxidant compound having a molecular weight not lower than 400 and a $\beta$-diketone compound in combination. By this, on irradiation with $\gamma$-ray, the vinyl chloride polymer undergoes little yellowing.

EP 0 600 696 A1

Jouve, 18, rue Saint-Denis, 75001 PARIS

## BACKGROUND OF THE INVENTION

Field of The Invention

This invention relates to vinyl chloride polymers and more particularly, to a process for preparing vinyl chloride polymers which are effectively suppressed from yellowing as will be caused by irradiation with radiations.

Description of The Prior Art

When using vinyl chloride polymers as articles for medical service such as packages of medicines, it is customary to sterilize the article with ethylene oxide gas (hereinafter referred to simply as EGO) according to the Japanese Pharmacopeia. However, in view of the environmental problem in and around the sterilizing chamber where the EGO sterilization is performed and also of the problem on medical articles having been subjected to sterilization wherein EGO is deposited on the article or penetrated thereinto, the sterilization with EGO is not necessarily satisfactory.

Instead, there is known another sterilization method using $\gamma$-ray generated from a radiation source containing a radioactive isotope. For the sterilization with $\gamma$-ray, it is usual to employ a radiation source containing $^{60}$Co or $^{137}$Cs while appropriately controlling the total exposure depending on the type and property of material to be sterilized and the degree of contamination. With ordinary medical articles, the exposure is 5 Mrad in maximum.

Polyvinyl chloride resins also have wide utility in the fields of packaging materials such as for food package containers, films, sheets and the like. In some cases, $\gamma$-ray has been irradiated for the purpose of sterilizing the packaging materials or food contents themselves.

However, the irradiation with $\gamma$-ray tends to bring about yellowing of vinyl chloride polymers or to lower the strength or elongation of the polymers. In order to solve these problems, there have been proposed improvements in composition at the time of molding of vinyl chloride polymers. Such improvements include addition of zinc and calcium salts of higher fatty acids (Japanese Patent Publication No. 60-23622) and methods wherein there are added plasticizers, epoxy stabilizers, zinc and/or calcium salts of higher fatty acids and metal silicates or hydrotalcites (Japanese Laid-open Patent Application Nos. 63-110241 and 64-38461). However, these are not yet satisfactory for preventing yellowing.

## SUMMARY OF THE INVENTION

It is accordingly an object of the invention to provide a process for preparing vinyl chloride polymers whereby the polymers are stable on irradiation with $\gamma$-ray with respect to their physical properties.

It is another object of the invention to provide a process for preparing vinyl chloride polymers which suffer little yellowing on irradiation with $\gamma$-ray whereby the polymers are very useful as packaging materials for medical service.

The above objects can be achieved, according to the invention, by a process for preparing a vinyl chloride polymer which comprises suspending a monomer selected from the group consisting of vinyl chloride and its mixtures with co-polymerizable monomers in an aqueous medium along with a monomer-soluble polymerization initiator and subjecting the resultant suspension to suspension polymerization, wherein the suspension comprises a phenolic antioxidant having a molecular weight of not lower than 400 and a $\beta$-diketone compound in amounts sufficient to impart a $\gamma$-ray resistance to the resultant vinyl chloride polymer.

## DETAILED DESCRIPTION AND EMBODIMENTS OF THE INVENTION

In the practice of the invention, a specific type of antioxidant and a $\beta$-diketone compound are used in combination in the suspension system. The resultant vinyl chloride polymer has these compounds uniformly dispersed therein. Thus, the vinyl chloride polymer has a good $\gamma$-ray resistance. The use of antioxidant and $\beta$-diketone compound in combination is essential for imparting a good $\gamma$-ray resistance to the final polymer. The absence of either the antioxidant or the $\beta$-diketone compound does not result in vinyl chloride polymers having a good $\gamma$-ray resistance.

The antioxidants useful in the present invention are phenolic compounds having a molecular weight of not lower than 400. If the molecular weight is lower than 400, the resultant vinyl chloride polymer is unsatisfactory with respect to the effect of suppressing yellowing at the time of irradiation with $\gamma$-ray. Although not limitative, specific examples of the phenolic compound having a molecular weight of not lower than 400 include triethylene glycol bis[3-(3-t-butyl-5-methyl-4-hydroxyphenyl)propionate], 1,6-hexanediol-bis[3-(3,5-di-t-butyl-4-hydroxyphenyl)propionate], pentaerythrityl-tetrakis[3-(3,5-di-t-butyl-4-hydroxyphenyl)propionate], octadecyl-3-(3,5-di-t-butyl-4-hydroxyphenyl)propionate and the like. These compounds may be used singly or in combination. The phenolic antioxidant having a molecular weight not lower than 400 is preferably used in an amount of from 0.005 to 5 parts by weight, more preferably from 0.005 to 0.5 parts by weight, per 100 parts of the monomer.

The $\beta$-diketone compounds used in combination with the antioxidant include, for example, acetylacetone, benzoylacetone, dibenzoylmethane, stearoylbenzoylmethane and mixtures thereof. The diketone compound is preferably used in an amount of from 0.005 to 5 parts by weight, 0.005 to 0.5 parts by weight, per 100 parts by weight of the monomer. The ratio by weight between the antioxidant and the diketone compound is favorably in the range of 1:9 to 9:1.

Vinyl chloride polymers of the invention can be obtained by known suspension polymerization techniques except that a specific type of antioxidant and a $\beta$-diketone compound are added to the suspension dispersed system in combination. For instance, an aqueous suspension dispersed solution containing a monomer or monomers and a polymerization initiator is prepared by use of a dispersion stabilizer. The dispersion solution is heated to start the polymerization. After completion of the polymerization, unreacted monomers are collected and the resultant polymer slurry is dried to obtain an intended polymer. The phenolic antioxidant and the $\beta$-diketone compound may be added to the polymerization system at any stage before the collection of unreacted monomers. For instance, these compounds may be added to the aqueous suspension dispersed solution prior to commencement of the polymerization or during the course of the polymerization. The compounds may be added by various methods. After the compounds are dissolved in appropriate solvents or suspended in water, the resultant solution or suspension may be pumped up to the polymerization system. The phenolic antioxidant and $\beta$-diketone compound may be added simultaneously or separately.

The monomers used for the polymerization include, aside from vinyl chloride, mixtures of vinyl chloride and other monomers copolymerizable therewith. If mixtures are used, vinyl chloride is generally present in an amount of not less than 50 wt% of the mixture.

Examples of the comonomers include $\alpha$-olefins such as ethylene, propylene, 1-butene, 1-pentene, 1-hexene, 1-heptene, 1-octene, 1-nonene, 1-decene, 1-undecene, 1-dodecene, 1-tridecene, 1-tetradecene and the like, acrylic acid or its esters such as methyl acrylate, ethyl acrylate and the like, methacrylic acid or its esters such as methyl methacrylate, maleic acid or its esters, vinyl esters such as vinyl acetate, vinyl propionate and the like, vinyl ethers such as lauryl vinyl ether, isobutyl vinyl ether and the like, maleic anhydride, acrylonitrile, styrene, vinylidene chloride, and other monomers copolymerizable with vinyl chloride. These comonomers may be used singly or in combination.

The polymerization initiators used in the present invention should be monomer-soluble and should be free of any benzene ring in the molecule. Examples of the monomer-soluble polymerization initiator include percarbonates such as diisopropyl peroxydicarbonate, di-2-ethylhexyl peroxydicarbonate, diethoxyethyl peroxydicarbonate and the like, peresters such as t-butyl peroxyneodecanoate, t-butyl peroxypivalate, t-hexyl peroxypivalate, 2,4,4-trimethyl pentyl-2-peroxy-2-neodecanoate and the like, and peroxides such as acetylcyclohexylsulfonyl peroxide, 3,5,5-trimethylhexanoyl peroxide, lauroyl peroxide and the like. These compounds may be used alone or in combination.

Along with these initiators, there may be used, in combination, water-soluble catalysts such as potassium persulfate, ammonium persulfate, hydrogen peroxide, cumene hydroperoxide and the like, either singly or in combination.

The dispersion stabilizer is used for suspension and dispersion of the monomers in an aqueous medium along with polymerization initiators. Examples of such a stabilizer include suspending agents such as natural or synthetic high molecular weight compounds, e.g. water or oil-soluble partially saponified polyvinyl alcohol, polyacrylic acid, vinyl acetate-maleic anhydride copolymer, cellulose derivatives such as hydroxypropylmethyl cellulose, gelatin and the like, solid dispersants such as calcium phosphate, hydroxyapatite and the like, nonionic emulsifiers such as sorbitan monolaurate, sorbitan trioleate, polyoxyethylene alkyl ethers and the like, sodium alkylbenzenesulfonates such as sodium laurylsulfate, sodium dodecylbenzenesulfonate and the like, and anionic emulsifiers such as sodium dioctylsulfosuccinate. These compounds may be used singly or in combination.

The manner of charging the aqueous medium, monomers, polymerization initiator and dispersion stabilizer into a polymerization vessel and the amounts thereof are those ordinarily used in the art. For instance, part of a polymerization initiator or a dispersion stabilizer may be added at a given stage after commencement of the polymerization. The polymerization temperature is set at a level of from 30 to 70°C, like known processes. If necessary, additives which are ordinarily used for the polymerization of vinyl chloride monomers may be added to the polymerization system. Such additives include, for example, polymerization regulators, chain transfer agents, pH adjusters, gelation modifiers, antistatic agents, crosslinking agents, fillers, buffering agents, scale preventives and the like.

The invention is more particularly described by way of examples.

Example 1

A mixture of the following formulation was charged into a stainless steel autoclave having an inner capacity of 2000 liters and equipped with an agitator and a jacket

| | |
|---|---|
| De-ionized water | 900 kg |
| Partially saponified polyvinyl alcohol (dispersant) | 480 g |
| t-Butyl peroxyneodecanoate (polymerization initiator) | 480 g |
| Octadecyl-3-(3,5-di-t-butyl-4-hydroxyphenyl)propionate (antioxidant, molecular weight = 531) | 180 g |
| Steroylbenzoylmethane | 180 g |

Thereafter, the autoclave was evacuated to a level of 50 mmHg, followed by further charge of 600 kg of vinyl chloride monomer. Under agitation of the content in the autoclave, hot water was passed through the jacket to raise the temperature to 50°C, followed by continuation of the polymerization while keeping the raised temperature. Upon lowering of the pressure within the autoclave to 6.0 kg/cm$^2$G, unreacted monomer was collected. The polymer-containing slurry was removed from the autoclave, followed by dehydration and drying to obtain vinyl chloride resin.

Example 2

The general procedure of Example 1 was repeated except that dibenzoylmethane was used instead of stearoylbenzoylmethane in the same amount as in Example 1, thereby obtaining vinyl chloride resin.

Example 3

The general procedure of Example 1 was repeated except that hexanoylbenzoylmethane was used instead of stearoylbenzoylmethane in the same amount as in Example 1, thereby obtaining vinyl chloride resin.

Example 4

The general procedure of Example 1 was repeated except that 180 g of triethyleneglycol bis-[3-(3-t-butyl-5-methyl-4-hydroxyphenyl)propionate (molecular weight = 586.8 g) was used instead of octadecyl-3-(3,5-di-t-butyl-4-hydroxyphenyl) propionate which was added prior to commencement of the polymerization, and was added after commencement of the polymerization and at the time when the inner pressure of the autoclave lowered to 6.0 kg/cm$^2$G, followed by collection of unreacted monomer, thereby obtaining vinyl chloride resin.

Comparative Example 1

The general procedure of Example 1 was repeated without addition of octadecyl-3-(3,5-di-t-butyl-4-hydroxyphenyl)propionate, thereby obtaining vinyl chloride resin.

Comparative Example 2

The general procedure of Example 1 was repeated without addition of stearoylbenzoylmethane, thereby obtaining vinyl chloride resin.

4

Comparative Example 3

The general procedure of Example 1 was repeated except that octadecyl-3-(3,5-di-t-butyl-4-hydroxyphenyl)propionate was replaced by bisphenol A (molecular weight = 228) in the same amount as used in Example 1, thereby obtaining vinyl chloride resin.

To 100 parts of the polymer powder obtained in each of Examples and Comparative Examples were added 55 parts by weight of dioctyl phthalate (DOP), 5 parts by weight of epoxidized soybean oil, 0.2 parts by weight of zinc stearate, 0.2 parts by weight of calcium stearate and 0.1 part by weight of stearic acid, followed by blending to obtain a composition. Each composition was rolled at 150°C and press molded into a sheet having a thickness of 2 mm and a size of 10 cm x 10 cm, followed by irradiation with $\gamma$-ray at 2.5 Mrad. These sheets were each subjected to a color test, thereby assessing the difference in tinting between the sheets prior to and after the irradiation with $\gamma$-ray.

The assessing standards are as follows.

○ : little degree of tinting
△ : slight degree of tinting
X: considerable degree of tinting

The results are summarized in Table below.

Table

|  | Example | | | | Comparative Example | | |
|---|---|---|---|---|---|---|---|
|  | 1 | 2 | 3 | 4 | 1 | 2 | 3 |
| Tinting | ○ | ○ | ○ | ○ | X | X | X |

As will be apparent from the above results, the vinyl chloride resins of the examples undergo little yellowing on irradiation with $\gamma$-ray. Thus, the vinyl chloride resins will be very useful as a packaging material for medical service wherein sterilization by $\gamma$-ray irradiation is effected.

Claims

1. A process for preparing a vinyl chloride polymer which comprises suspending a monomer selected from the group consisting of vinyl chloride and its mixtures with co-polymerizable monomers in an aqueous medium along with a monomer-soluble polymerization initiator, and subjecting the resultant suspension to suspension polymerization, wherein said suspension comprises a phenolic antioxidant having a molecular weight of not lower than 400 and a $\beta$-diketone compound in amounts sufficient to impart a $\gamma$-ray resistance to the resultant vinyl chloride polymer.

2. A process according to Claim 1, wherein said monomer is vinyl chloride.

3. A process according to Claim 1, wherein said monomer is a mixture of vinyl chloride and a copolymerizable monomer.

4. A process according to Claim 1, 2 or 3, wherein said phenolic antioxidant is present in an amount of from 0.005 to 5 parts by weight per 100 parts by weight of said monomer.

5. A process according to any one of Claims 1 to 4 wherein said phenolic antioxidant is a member selected from the group consisting of triethylene glycol bis[3-(3-t-butyl-5-methyl-4-hydroxyphenyl)propionate], 1,6-hexanediol-bis[3-(3,5-di-t-butyl-4-hydroxyphenyl)propion ate], pentaerythrityl-tetrakis[3-(3,5-di-t-butyl-4-hydroxyphenyl)propionate], octadecyl-3-(3,5-di-t-butyl-4-hydroxyphenyl)propionate and mixtures thereof.

6. A process according to any one of Claims 1 to 5, wherein said $\beta$-diketone compound is present in an amount of from 0.005 to 5 parts by weight per 100 parts by weight of said monomer.

7. A process according to any one of Claims 1 to 6, wherein said $\beta$-diketone compound is a member selected from the group consisting of acetylacetone, benzoylacetone, dibenzoylmethane, stearoylbenzoylme-

5

thane and mixtures thereof.

8. A process according to any one of Claims 1 to 7, wherein said phenolic antioxidant and said β-diketone compound are used at a ratio by weight of 1:9 to 9:1.

9. A process according to any one of Claims 1 to 8, wherein said polymerization initiator consists of a member selected from the group consisting of diisopropyl peroxydicarbonate, di-2-ethylhexyl peroxydicarbonate, diethoxyethyl peroxydicarbonate, t-butyl peroxyneodecanoate, t-butyl peroxypivalate, t-hexyl peroxypivalate, 2,4,4-trimethyl pentyl-2-peroxy-2-neodecanoate, acetylcyclohexylsulfonyl peroxide, 3,5,5-trimethylhexanoyl peroxide, lauroyl peroxide and mixtures thereof.

10. A process according to Claim 9, wherein said polymerization initiator is used in combination with a water-soluble catalyst selected from the group consisting of potassium persulfate, ammonium persulfate, hydrogen peroxide, cumene hydroperoxide and mixtures thereof.

**European Patent Office**

# EUROPEAN SEARCH REPORT

Application Number

EP 93 30 9506

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 100 741 (RHONE-POULENC SPEC. CHIM.) * the whole document * --- | 1-10 | C08F14/06 C08F2/44 |
| X | DATABASE CHEMICAL ABSTRACTS (HOST: STN): CA110(2): 9132s, Colombus, Ohio, USA; & JP-A-63 162 701(CHISSO CORP.)06-07-88 *Abstract* --- | 1-10 | |
| A | EP-A-0 014 508 (SHELL INTERNAT. RES. MAT.) --- | 1 | |
| A | EP-A-0 281 210 (SHIN -ETSU CHEM. CO., LTD) ----- | 1 | |

TECHNICAL FIELDS SEARCHED (Int.Cl.5)

C08F

The present search report has been drawn up for all claims

| Place of search | Date of completion of the search | Examiner |
|---|---|---|
| THE HAGUE | 7 February 1994 | Glikman, J-F |

EPO FORM 1503 03.82 (P04C01)